# EUROPEAN PATENT SPECIFICATION

(11) **EP 2 138 470 B1**
(45) Date of publication and mention of the grant of the patent: **19.07.2017**
(21) Application number: 09162283.7
(22) Date of filing: 09.06.2009
(51) Int. Cl.: C03C 1/00, C03C 10/00, B09B 3/00, C03C 6/00, C03C 3/087

(54) **A mixture of dangerous refuse and a relative treatment**
Mischung aus gefährlichem Müll und eine Relativbehandlung
Mélange de déchets dangereux et traitement associé

(30) Priority: 25.06.2008 IT RE20080057
(43) Date of publication of application: 30.12.2009
(73) Proprietor: Scater S.R.L., 41043 Formigine (Modena) (IT)
(72) Inventor: Carnevali, Michele, 41043 Formigine (Modena) (IT)
(74) Representative: Corradini, Corrado

(56) References cited:
- CN-A- 1 055 724
- CN-A- 1 072 398
- CN-A- 1 868 946
- CN-A- 85 100 521
- CN-A- 101 007 708
- US-A- 4 191 546
- US-A1- 2005 268 656
- YEON-HUM YUN ET AL: "Waste fluorescent glass and shell derived glass-ceramics" JOURNAL OF MATERIALS SCIENCE, KLUWER ACADEMIC PUBLISHERS, BO, vol. 37, no. 15, 1 August 2002 (2002-08-01), pages 3211-3215, XP019209671 ISSN: 1573-4803

## Description

The present invention relates to a mixture of hazardous waste for the preparation of cladding or flooring glass-ceramic materials, in the ambit of a process for treating hazardous waste.

The invention also relates to marketable cladding or flooring products, typically slabs or tiles, which can be obtained with the process of the invention starting from the mixture of hazardous waste.

The problem of waste has for many years been at the centre of attention of governments and public opinion.

Present legislation separates waste into:
urban waste
special waste
and, according to danger characteristics, into:
   hazardous waste
   non-hazardous waste.

Special waste comprises refuse deriving from agriculture, industry, craft trades, excavating and demolition, the health area, unused machines and equipment, and others besides. Hazardous waste items are itemised in a list attached to the law relating to it.

Various treatments have been known for some time, relating to inertisation or recycling of single hazardous waste items, among which are heat vitrification treatments and glass-ceramic processes.

The glassy state is one in which some elements known as vitrifiers (silica, alumina, boric acid, borax etc.) possibly mixed with modifiers (oxides, alkalines, alkaline earth metals, etc.) and colorants (heavy metals, chrome, vanadium, cobalt etc.) can form a non-crystalline solid amorphous structure having the rigidity of the solid state while exhibiting other characteristics typical of a liquid.

The glassy state is unstable and glasses tend slowly to assume a crystalline structure, in which the mixture of elements divides forming various natural silicates intimately mixed and connected (micro-crystalline structure).

This natural process, known as glass-ceramicisation, can be completed over thousands of years for particularly stable glasses or in shorter times for more unstable glasses, but can also be artificially induced and speeded up such as to obtain materials known as glass-ceramics.

In particular, the process of glass-ceramicisation includes: preparing a base mixture by grinding and homogenisation of the solid raw materials, as happens in the preparation of normal glass; fusion and modelling of the base mixture such as to obtain a glassy-matrix product, constituted mostly by components of the SiO₂-Al₂O₃-CaO system and by metallic alkaline oxides; and finally heating vitrified material according to a characteristic diagram for the base mixture, such as to ceramicise the glass mass.

In general terms, disposal of hazardous waste via glass-ceramicisation comprises adding the hazardous waste to the base mixture. In this way, the added mineral substances and the hazardous elements present in the initial waste, in particular heavy metals, are firstly incorporated in the glass, and thereafter enter the crystalline structure of the glassy ceramic material thus obtained, such that lixiviation tests on these materials (giving-out of hazardous substances following chemical attack with certain agents specified in the norms) are considerably below the limits envisaged by the present norms and standards.

If the waste contains highly-toxic substances (with regard to breathing) such as crystalline microfibres of asbestos, in particular in the form of asbestos cement for cladding (eternit) or insulating fibre, these are inertised during a stage of heating above 1100°C.

At present, use of glass-ceramicisation treatments is limited to some hazardous mineral waste, such as refuse containing asbestos, in particular in the form of asbestos cement for cladding (eternit) or insulating fibre, waste from urban incinerators, grid ash and volatile ash collected from filter systems, foundry chaff and sludges originating from contaminated sites).

In all the above cases, the process of glass-ceramicisation has been adapted to the specific treated waste, such that the plants which are used are normally different for each type of hazardous waste and the products obtained are in turn very varied.

Beyond this, glass-ceramic manufactures deriving from the treatment of hazardous waste generally have a low commercial value, as the working techniques at present used do not enable glassy masses obtained with the raw materials to be modelled effectively.

One of these working techniques is pressing, which comprises causing a batched quantity of molten glass to run into a mould, in which the molten glass is pressed, such as to obtain a product of desired shape and size, for example a slab which can be used for cladding and/or flooring.

This method requires absolutely precise batching of the quantity of molten glass in the paste state to be conveyed into the mould.

This means that it is effective only if the characteristics of fusibility and fluidity of the glass remain constant over the whole duration of the process, i.e. if apart from the technical parameters of the process the technological parameters of the molten glass, among which the composition of the raw materials and the formulation of the base mixture, remain unvaried.

In the treatment of hazardous waste of varied origin, it is not possible to guarantee the constancy of the technological parameters of molten glass necessary for the success of the pressing technique, so it is not easy to realise products having a high commercial value, such as for example cladding and/or flooring slabs.

US 2005/268656 A1 discloses a method for providing a crystalline material comprising the steps of: providing ash, melting said ash as to form a molten mixture and devitrifying said molten mixture, in the presence of various additives.

Yeon-Hum Yun et al. 'Waste fluorescent glass and shell derived glass-ceramics' in Journal of Material Science, Vol. 37, No. 15, 2002 discloses a method for preparing glass-ceramics by using glass and waste shell as starting materials to resolve environmental problems. An aim of the present invention is to provide a mixture formed by a plurality of hazardous waste, which can be treated with a single process, using a single plant and a same technology for all the waste treated, such as to obtain a commercially-profitable manufacture due to the low cost of the raw materials used.

At the same time, the invention has the aim of contemporaneously treating a plurality of hazardous waste products, in quantities which are sufficient to guarantee a further considerable economic benefit, deriving from the savings in the costs of disposing of these materials (which are, incidentally, constantly increasing).

These aims are attained by the characteristics of the invention as reported in the independent claim. The dependent claims delineate preferred and/or particularly advantageous aspects of the invention.

As the oxide content of the minerals constituting the waste is often very variable, it is preferable to add further additives to the mixture, for example silicates and possibly nucleants, and if necessary coloured oxides such as to obtain a more constant formulation according to the following weight composition:
SiO₂ 40-60 %
Al₂O₃ 5-25 %
CaO 10-30%
Na and K oxides 2-5 % together.

Thanks to the grinding stage b2 of the solidified glass and the pressing b4 of the glass powders to form the product, the need to model the molten glass as in the prior art is obviated, leading to a complete controllability of the forming stage which enables simple and effective manufacture of glass-ceramic products having a high commercial value, in particular cladding and/or flooring slabs.

Further, the number of intermediate products made during the performing of the treatment is increased, so that it is possible to perform corrective interventions on the mixture in a greater number of subsequent stages of the process, such as to obtain a greater controllability of the whole cycle of transformation of the waste, which by its nature has rather non-constant characteristics, and also such as to obtain products having more uniform characteristics.

For example, further additives can be added to the mixture of glass powder and bond obtained in stage b2), in particular suitable colorants or other substances destined to lend specific characteristics to the mixture.

Some of these additives cannot be added before fusion and thus cannot be used in the usual glass-ceramic treatments, giving the process of the invention a greater liberty and flexibility of use with respect to the prior art. Finally, as crystallisation of ceramicisation of a glassy body generally starts from the external surface (where the activating energy required is less) and progresses towards the centre, the ceramicisation stage c) is enhanced and speeded up by the very large specific surface of the product, which is formed in the majority by very fine granules of glass powder (stage b2), to the point that it is not necessary to add nucleant agents.

In a preferred aspect of the process of the invention, the stage of ceramicisation c) of the product made from compacted powders is regulated such as to obtain both ceramicisation and sintering of the glass powders. Worthy of note is that the sintering process - which is done using a densification mechanism by viscous flow - hinders the ceramicisation process and vice versa; and that these two processes are done using different chemical kinesis, i.e. at different speeds according to the influencing factors, in particular according to the temperature and the temperature gradient to which the product is subjected during firing.

In other words, if the firing stage is regulated such as to enhance ceramicisation with respect to sintering, the crystallisation of the glass powders hinders densification, leading to a finished product having a high degree of porosity, which reduces the mechanical characteristics thereof. On the other hand, if the firing stage is regulated such as to enhance sintering, the smallest glass granules weld together, with a reduction in the useful crystallising surface and a consequent inhibition of the ceramicisation process.

For this reason the invention comprises regulating the firing stage such as to obtain an optimal compromise between the need to perform sintering (to reduce porosity as much as possible) and the need to crystallise (in order to obtain an effective ceramicisation). This regulation depends case-by-case on the formation of the compacted powder mixture which forms the product, and is obtained by suitably establishing the variation in the heat-treatment temperature as a function of the firing time, which generally comprises a stage of heating to about 900°C followed by a series of appropriate heating cycles, stabilisation and cooling in the range of between 900°C and 1100°C. In any case, the regulation of the firing stage must be performed such as to manufacture a product preferably having the typical characteristics of glass-ceramic, in particular a hardness level in the Mosh 7 scale which is above 6 Gpa and a high level of resilience.

Finally, the invention relates to the glass-ceramic material product, as obtained with the mixture and the process described herein above, in particular slabs for urban flooring.

Thanks to the invention it is possible to realise a number of hazardous waste materials contemporaneously as a raw material for manufacturing products such as slabs for road flooring.

In this way, the manufacture of glass-ceramic products enables disposal of large quantities of hazardous waste, and/or numerous types of hazardous waste contemporaneously, thus advantageously increasing the economic exploitation of the finished product, thanks to the large earnings that can be made from disposal of this type of waste.

Further, the waste is transformed into products having a specific market placing, with obvious economic advantages, considering the practically-zero value of the raw materials used and recuperated for a new utilisation. Further characteristics and advantages of the invention will emerge from a reading of the following description, provided by way of non-limiting example, with the aid of the figures illustrated in the accompanying tables of drawings.
Figure 1 is a diagram of a plant for performing the process of the invention.
Figure 2 is a diagram of a plant for performing a variant of the process of the invention.
Figures 3A and 3B show two possible firing diagrams for the compacted products.

Hazardous waste materials used in the process of the present invention are reported in the following table.

**Table A**

| | |
|---|---|
| A) | ACMs - asbestos-containing materials |
| B) | Spent calcium and other substances originating from purification plants |
| C) | Sludges produced by purification of industrial effluents |
| D) | Heavy waste and light ash coming from incinerators and combustion plants |
| E) | Drainage slurry from wet-ground contaminants, or from storage plants |
| F) | Sludge from restored contaminated terrain |
| G) | Hydro-metallurgical sludge |
| H) | Metallurgic-process waste |
| I) | Glass and television screens, computers, electronic apparatus, glass fibre and glass waste |

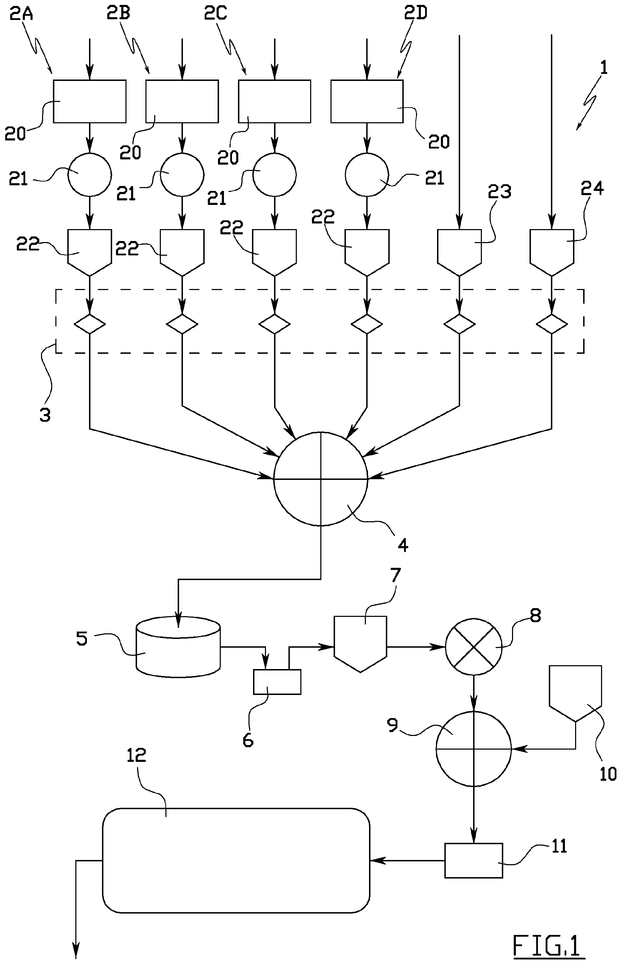

The plant illustrated in figure 1 comprises a plurality of grinding lines, denoted by reference numbers 2A, 2B and 2C, each of which is suitable for grinding a respective hazardous waste material which is provided in large pieces, for example industrial waste, incinerator waste, special glass items or already-inertised asbestos.

Inertised asbestos can be obtained with a special inertisation plant (not illustrated) which is positioned upstream of the relative grinding line. The inertisation plant, in general, comprises one or more kilns, of a continuous or intermittent type, in which the waste containing asbestos, in particular in the form of asbestos cement for claddings (eternit) is heated to about 1100°C such as to transform the totality of the asbestos microfibres which represent the hazardous element of these materials into a stable amorphous structure that is not hazardous.

Each grinding line 2A-2C schematically comprises a depositing container 20 for the waste, a dry-grinding mill 21 and a collection silo 22 in which the ground waste is stored.

The machines and the accessories of the plant on each grinding line 2A-2C can be different on the basis of the specific characteristics of the material to be ground, for example on the basis of the hardness of the material.

In the illustrated plant 1, the grinding line 2A is designed to grind inert silicate minerals, among which sands, feldspars, inertised asbestos and others; the grinding line 2B is designed to grind dry hazardous waste, including sludges, chaff, grill ash and other; the grinding line 2C is designed to grind moist hazardous waste, including decontaminated terrain waste, semi-solid sludges and others.

In all cases, the waste is ground in grinding mills 21 up to reaching a suitable granulometry, preferably less than 500 micron, which enables successful vitrification thereafter.

The plant 1 further comprises a grinding line 2D for vitrifiable materials, for example silicate materials.

The grinding line 2D also comprises a depositing container 20 for the vitrifiable materials, a dry-grinding mill 21 and a storage silo 22 in which the ground material is stored.

Finally the plant 1 comprises two special storage silos 23 and 24, respectively for the waste which arrives already in the form of powders, for example ashes, and for waste which arrives in the form of sludges.

The ground waste, any vitrifiable materials and the materials arriving already in the powder and/or sludge state, are removed from the storage silos 22-24 by a system of batching and weighing belts, denoted in their entirety by 3, which are destined to continuously supply a continuous mixer 4 with batched quantities of the ground raw materials according to the specific formulation of the mixture to be obtained.

The whole process of grinding, storing and batched collecting of the raw materials is completely programmable and automated.

A mixture is prepared in the continuous mixer 4 containing (contemporaneously) at least three types of waste among those listed herein above, in quantities of at least 50% weight with respect to the total weight of the mixture itself.

In general, the mixture preferably contains 25-70% in weight of ACM.

Further, as the contents in mineral oxides containing the waste are not constant, there is also an addition of further additives, which in the present example are silicate materials coming from the grinding line 2D, able to facilitate the vitrification of the mixture.

These additives have the task of enabling the final mixture to have a rather constant formulation, preferably according to the composition in weight reported in the following table.

**Table B**

| |
|---|
| SiO₂ 40-60 % |
| Al₂O₃ 5-25 % |
| CaO 10-30% |
| Na and K oxides 2-5 %. |

Some examples of mixture formulations of the invention are reported in the following table.

**Table C**

| Waste in the mixture | Mixture N° 1 (% weight) | N° 2 | N° 3 | N° 4 | N° 5 | N° 6 | N° 7 |
|---|---|---|---|---|---|---|---|
| ACM | 15-25 | 20-30 | 15-25 | | 20-30 | 15-20 | 35-55 |
| Spent calcium | | 10-15 | 10-15 | 25-30 | | 10-20 | 1-5 |
| Industrial sludge | | | | | 5-10 | | |
| Volatile ash and waste (incinerators) | 10-15 | 15-20 | | 15-25 | 20-30 | | 5-20 |
| Drainage sludge | | | | | | 15-25 | |
| Decontaminated terrain waste | | | | 10-15 | | | |
| Hydro-metallurgical sludge | | | | | | | 1-5 |
| Metallurgic-process waste | 15-25 | | | | | | |
| Glass and television screens, computers, electronic apparatus | | | 15-25 | | | | |

To facilitate transformation of the glass into glass-ceramic which will be obtained from the mixture, appropriate nucleant agents can be added to the mixture, such as TiO₂ or zircon minerals, preferably oxides and zircon carbonates.

As will be better clarified herein below, this addition is not strictly necessary in the process of the invention, which fact represents a technical and economic advantage.

Appropriate coloured oxides can also be added to the above substances, which are suitable for giving the ceramicised product the desired aesthetic effect. These oxides are chosen both according to the components of Table B and already present in the mixture, and according to the materials normally found in the waste used.

All these substances are subjected to mixing in the continuous mixer 4, such as to enable the reactions in the following heating operation to take place.

The mixture prepared in the continuous mixer 4 is collected by a conveyor which feeds it directly into a melting kiln 5, preferably a continuous tank furnace in which the mixture is heated up to a temperature of above 1300°C, such as to realise vitrification and obtain molten glass.

Naturally the mixture of solid loose materials exiting the continuous mixer 4 might also be stored in special storage silos (not illustrated) before being supplied internally of the melting kiln 5.

The molten glass exiting the melting kiln 5 is dropped internally of one or more water-filled tanks 6, provoking a sharp cooling of the molten glass, which forms into very fragile glass chips, called frits, which is then stored for a certain time internally of a deposit silo 7, while the glass chips dry at least partially from the water.

The dry or semi-dry frit is then transported internally of a grinding mill 8 where, thanks to the extreme fragility of the glass it is made of, it is easily transformed into glass powder, preferably having a granulometry of less than 30 micron.

The glass powder is removed from the grinding mill 8 and supplied internally of a mixer 9, in which a suitable bonding substance is also placed, coming from a relative storage silo 10, such as to realise a uniform powder mixture.

The bonding substance can be either organic or inorganic, and is destined to improve the cohesion capacity of the powder mixture after pressing, such that the powders can maintain the shape imposed.

The bonding substance can be, for example, selected from the group reported in the following table.

**Table D**

| |
|---|
| Clay |
| Thermoplastic materials |
| Synthetic waxes |
| Hardening liquid plastics. |

Inside the mixer 9, the powder mixture can further be enriched and/or corrected with further additives, for example colorant oxides or other substances which lend the powder mixture desired characteristics.

The powder mixture is thus removed from the mixer 9 and supplied to a press 11, where it is cold-pressed in moulds, generally at pressures of not less than 10 Mpa, in order to form compacted powders having a predetermined shape.

The products are preferably cladding and/or flooring slabs, which can have either a perfectly flat shape or a profiled shape according to use requirements, for example in order to realise kerbs, bordering, steps and such products.

The pressed powder products are removed one-by-one by a robot (not illustrated) and located on refractory bats, which move on a closed-circuit conveyor system, for example a chain-conveyor, cyclically passing into a loading position in proximity of the press 11 and thus through a firing kiln 12. The firing kiln 12 is preferably a tunnel kiln, of a type provided with a roller conveyor, and burners which are located both on the sides of the tunnel and above and below the roller plane.

In the firing kiln 12 the compacted powder products are heated and subjected to a thermal ceramicisation treatment which promotes crystallisation of the glass powders, such as to obtain a product having the glass-ceramic characteristics.

It is worthy of note that crystallisation is facilitated and made more rapid by the large specific surface of the product, which is formed in the great majority of very fine glass powder chips, to the point where the addition of nucleant agents is not generally necessary.

The thermal treatment, defined by the time spent in the tunnel kiln 12, and by the thermal diagram according to the position of the products along the tunnel, is regulated such as to obtain a contemporaneous process of sintering the powders, such as to reduce as much as possible the porosity of the finished product, in the ambit of a process which can be defined in general terms as sinter-crystallisation.

This regulation depends case-by-case on the formulation of the powder mixture which forms the product, and consists in the selection of the firing temperatures and the time the products remain at the various temperatures in the kiln 12.

In general, the firing process comprises a stage of heating the pressed products to about 900°C, possibly followed by a series of heating cycles, maintenance and cooling in the range of between 900°C and 1100°C.

The regulation of the whole firing process is finalised to obtain a proper compromise between the sintering requirement (to reduce porosity as much as possible) and the need to crystallise (to obtain an effective ceramicisation), such as to manufacture a finished product having substantially the characteristics of glass-ceramics, in particular a hardness in the Mosh 7 scale of more than 6 Gpa, and a high level of resilience.

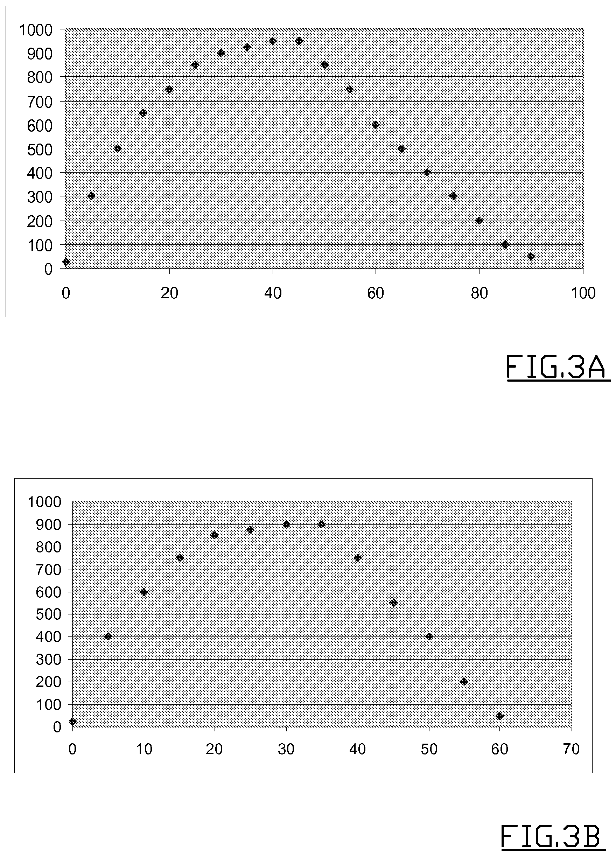

Two possible firing diagrams suitable for the formulations reported in table C are illustrated in figures 3A and 3B, where the y-axis shows the time spent in the kiln expressed in minutes, and the x-axis gives the temperature expressed in degrees Celsius.

The date in the graphs of figures 3A and 3B are also reported in tables below.

**Table E**

| Time (minutes) | Temperature (degrees Celsius) |
|---|---|
| 0 | 25 |
| 5 | 300 |
| 10 | 500 |
| 15 | 650 |
| 20 | 750 |
| 25 | 850 |
| 30 | 900 |
| 35 | 925 |
| 40 | 950 |
| 45 | 950 |
| 50 | 850 |
| 55 | 750 |
| 60 | 600 |
| 65 | 500 |
| 70 | 400 |
| 75 | 300 |
| 80 | 200 |
| 85 | 100 |
| 90 | 50 |

**Table F**

| Time (minutes) | Temperature (degrees Celsius) |
|---|---|
| 0 | 25 |
| 5 | 400 |
| 10 | 600 |
| 15 | 750 |
| 20 | 850 |
| 25 | 875 |
| 30 | 900 |
| 35 | 900 |
| 40 | 750 |
| 45 | 550 |
| 50 | 400 |
| 55 | 200 |
| 60 | 50 |

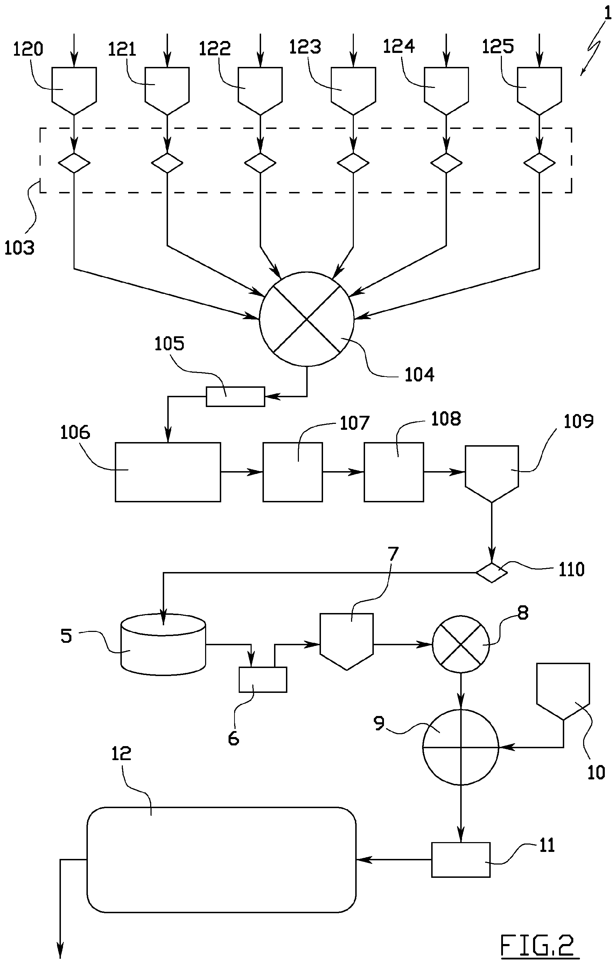

Figure 2 is a diagram of a plant 100 for performing an alternative process for treating waste according to the present invention.

In this embodiment, each component of the base mixture, both mineral and waste, is located internally of a container silo.

In the illustrated example, the plant 10 comprises six container silos, respectively denoted by numerical references from 120 to 125, which respectively contain inert silicate minerals, for example, sands, feldspars, inertised asbestos and other; dry hazardous waste, for example sludges, chaffs, grill ashes and other; moist hazardous waste, for example decontaminated terrain waste, semi-solid sludge and others; vitrifiable materials for example silicate materials; waste which at the outset is already in powder form, for example ashes; and waste which at the outset is in the form of sludge.

Materials in large pieces can be broken up before being located in the container silos 120-125. For example, inertised asbestos cement is broken up using a normal roller mill (not illustrated).

Downstream of the container silos 120-125 a system 103 of conveyor belts, batchers and weighers is located, which is destined to continuously extract batched quantities of the solid raw components from the container silos, such as to make up a mixture according to the desired formulation.

The system 103 supplies the mixture of materials internally of a single grinding mill 104, preferably a continuous wet mill, in which the raw materials are milled with 25-40% water, to form a slip having the exact previously-set composition.

The slip is then discharged into a storage tank 105, from which it passes into a filter-press 106, where it is compacted and densified to form slabs containing 15-20% water.

Downstream of the filter press 106 an extruder 107 is installed, which transforms the slabs of slip into small cylinders, usually called pellets, which are then dried in a continuous drier 108 before being collected in a storage silo 109.

A batching system 110 is located downstream of the storage silo 109, which batching system supplies batched quantities of pellets internally of a melting kiln 5 in order to obtain molten glass.

Starting from the melting kiln 5, the plant 100 is structurally and functionally identical to the plant 1 described in the first embodiment of the method of the invention, to which reference is made for further details.

Obviously, a technical expert in the sector might make numerous modifications of a technical-applicational nature to the plants 1, 100 and the treatment process performed by the plants, without its forsaking the ambit of the invention as claimed herein below.

## Claims

1. A process for treatment of hazardous waste, comprising stages of
a) preparing a mixture of at least three different hazardous waste for the preparation of cladding or flooring glass-ceramic materials selected from a group constituted by:
A) ACMs - asbestos-containing materials
B) Spent calcium and other substances originating from purification plants
C) Sludges produced by purification of industrial effluents
D) Heavy waste and light ash coming from incinerators and combustion plants
E) Drainage slurry from wet-ground contaminants, or from storage plants
F) Sludge from restored contaminated terrain
G) Hydro-metallurgical sludge
H) Metallurgic-process waste
I) Glass and television screens, computers, electronic apparatus, glass fibre and glass waste
an overall quantity of hazardous waste contained in the mixture being at least 50% in weight of the mixture;
b) grinding and/or mixing and melting said mixture up to formation of a molten glass;
c) heating a vitrified material obtained in the preceding stage b) up to ceramicisation of the vitrified material,
**characterised in that** said ceramicisation stage c) is preceded by the stages of
b2) solidifying and grinding said vitrified material obtained in stage b) such as to obtain a glass powder;
b3) mixing said glass powder with a bond for improving the cohesion capacities of the mixture after pressing.
b4) pressing said powder mixture such as to obtain a manufacture of compacted powders;
the stage of ceramicisation (c) being obtained by firing the compacted powder product such as to ceramicise the glass powders.

2. The process of claim 1, **characterised in that** during said stage b2) the solidified glass is ground such as to obtain glass powder having a granulometry of less than 30 micron.

3. The process of claim 2, **characterised in that** the bond of stage b3) is selected from a group comprising:
Clay
Thermoplastic materials
Synthetic waxes
Hardening liquid plastics.

4. The process of claim 1, **characterised in that** in stage b) the hazardous waste is ground up until a granulometry of less than 500 micron is achieved, before melting.

5. The process of claim 1, **characterised in that** the grinding of the hazardous waste is done by wet-milling, such as to obtain slips.

6. The process of claim 6, **characterised in that** said slips are subjected to pellet-forming, such as to obtain chips which are then dried and subsequently melted.

7. The process of claim 1, **characterised in that** said stage of ceramicisation c) comprises a stage of heating to about 900°C followed by a series of heating cycles, stabilising cycles and cooling cycles in a range of between 900°C and 1100°C.

8. The process of claim 1, **characterised in that** said stage of ceramicisation c) is performed in such a way as to obtain both ceramicisation and sintering of the compacted powder product.

9. The process according to any of the preceding claims, **characterised in that** , the rest of said mixture consisting of additives, mostly silicates, if necessary to enrich the hazardous waste mixture with vitrifying oxides.

10. The process of claim 1, **characterised in that** said mixture has the following composition in weight:
SiO2 40-60 %
Al2O3 5-25 %
CaO 10-30%
Na and K oxides 2-5 %

11. The process of claim 10, **characterised in that** said mixture further contains colouring oxides.

12. The process of claim 10, **characterised in that** said mixture comprises 25-70% of ACM.

13. The process of claim 10, **characterised in that** said mixture contains 15-25% of ACM, 10-15% of incinerator waste and 15%-25% of waste coming from metallurgical processes.

14. The process of claim 10, **characterised in that** said mixture contains 20-30% of ACM, 10-15% of spent calcium and 15-20% of waste and light ash from incinerators.

15. The process of claim 10, **characterised in that** said mixturecontains 15-25% of ACM, 10-15% of spent calcium and 15-25% of television screens and computers and electronic apparatus.

16. The process of claim 10, **characterised in that** said mixture contains 25-30% of spent calcium, 15-25% of waste and light ash from incinerators and 10-15% of decontaminated terrain waste.

17. The process of claim 10, **characterised in that** said mixture contains 20-30% of ACMs, 20-30% of light ash waste from incinerators and 5-10% of industrial sludge.

18. The process of claim 10, **characterised in that** said mixture contains 15-20% ACM, 10-20% of spent calcium and 15-25% of drainage sludge.

## Patentansprüche

1. Verfahren zur Behandlung von Gefahrgutabfällen, umfassend folgende Stufen:
a) Herstellen einer Mischung von wenigstens drei verschiedenen Gefahrgutabfällen zur Herstellung von Glaskeramikmaterialien für Verkleidungen oder Bodenbeläge, ausgewählt aus einer Gruppe, die gebildet wird von:
A) ACMs - asbesthaltige Materialien
B) Verbrauchtes Calcium und andere, in Kläranlagen entstehende Stoffe
C) Schlämme, die beim Klären von Industrieabwässern entstehen
D) Schwere Abfälle und leichte Asche aus Verbrennungsanlagen und Feuerungsanlagen
E) Abwasserrückstände aus nassvermahlenen Schadstoffen oder aus Lageranlagen
F) Schlamm aus kontaminiertem, saniertem Gelände
G) Hydrometallurgischer Schlamm
H) Metallurgische Prozessabfälle
I) Glas und Fernsehbildschirme, Computer, elektronische Geräte, Glasfaser und Glasabfälle
wobei eine Gesamtmenge der in der Mischung enthaltenen Gefahrgutabfälle wenigstens 50 Gew.-% der Mischung beträgt;
b) Vermahlen und/oder Mischen und Schmelzen der Mischung bis zur Bildung einer Glasschmelze;
c) Erhitzen eines in der vorhergehenden Stufe b) erhaltenen verglasten Materials bis zur Keramisierung des verglasten Materials,
**dadurch gekennzeichnet, dass** der Keramisierungsstufe c) folgende Stufen vorangestellt sind:
b2) Erstarrenlassen und Vermahlen des in der Stufe b) erhaltenen, verglasten Materials, um ein Glaspulver zu erhalten;
b3) Mischen des Glaspulvers mit einer Bindung zur Verbesserung der Kohäsionsfähigkeit der Mischung nach dem Pressen;
b4) Pressen der Pulvermischung, um die Herstellung von verdichtetem Pulver zu erhalten;
wobei die Stufe der Keramisierung (c) durch Brennen des verdichteten Pulverprodukts erhalten wird, um das Glaspulver zu keramisieren.

2. Verfahren nach Anspruch 1, **dadurch gekennzeichnet, dass** in der Stufe b2) das erstarrte Glas vermahlen wird, um Glaspulver mit einer Korngröße von weniger als 30 Mikrometer zu erhalten.

3. Verfahren nach Anspruch 2, **dadurch gekennzeichnet, dass** die Bindung der Stufe b3) ausgewählt ist aus einer Gruppe umfassend:
Ton
Thermoplastische Materialien
Synthetische Wachse
Sich verfestigende, flüssige Kunststoffe.

4. Verfahren nach Anspruch 1, **dadurch gekennzeichnet, dass** in der Stufe b) die Gefahrgutabfälle vermahlen werden, bis eine Korngröße von weniger als 500 Mikrometer vor dem Schmelzen erreicht wird.

5. Verfahren nach Anspruch 1, **dadurch gekennzeichnet, dass** das Vermahlen der Gefahrgutabfälle durch Nassvermahlen vorgenommen wird, um Schlicker zu erhalten.

6. Verfahren nach Anspruch 6, **dadurch gekennzeichnet, dass** die Schlicker der Granulatbildung unterzogen werden, um Späne zu erhalten, die anschließend getrocknet und danach geschmolzen werden.

7. Verfahren nach Anspruch 1, **dadurch gekennzeichnet, dass** die Stufe der Keramisierung c) eine Stufe des Erhitzens auf ca. 900 °C umfasst, auf welche eine Reihe von Heizzyklen, Stabilisierungszyklen und Kühlzyklen in einem Bereich von 900 °C bis 1100 °C folgt.

8. Verfahren nach Anspruch 1, **dadurch gekennzeichnet, dass** die Stufe der Keramisierung c) derart ausgeführt wird, dass sowohl eine Keramisierung als auch eine Sinterung des verdichteten Pulverprodukts erhalten wird.

9. Verfahren nach einem der vorstehenden Ansprüche, **dadurch gekennzeichnet, dass** die restliche Mischung, bestehend aus Additiven, hauptsächlich Silikaten, zur Anreicherung der Mischung aus Gefahrgutabfällen mit glasbildenden Oxiden erforderlich ist.

10. Verfahren nach Anspruch 1,
**dadurch gekennzeichnet, dass** die Mischung die folgende Zusammensetzung in Gewichtsprozent aufweist:
SiO2 40-60 Gew.-%
Al2O3 5-25 Gew.-%
CaO 10-30 Gew.-%
Na- und K-Oxide 2-5 Gew.-%

11. Verfahren nach Anspruch 10, **dadurch gekennzeichnet, dass** die Mischung ferner farbgebende Oxide enthält.

12. Verfahren nach Anspruch 10, **dadurch gekennzeichnet, dass** die Mischung 25-70 % ACM umfasst.

13. Verfahren nach Anspruch 10, **dadurch gekennzeichnet, dass** die Mischung 15-25 % ACM, 10-15 % Verbrennungsrückstände und 15-25 % metallurgische Prozessabfälle enthält.

14. Verfahren nach Anspruch 10, **dadurch gekennzeichnet, dass** die Mischung 20-30 % ACM, 10-15 % verbrauchtes Calcium und 15-20 % Abfälle und leichte Asche aus Verbrennungsanlagen enthält.

15. Verfahren nach Anspruch 10, **dadurch gekennzeichnet, dass** die Mischung 15-25 % ACM, 10-15 % verbrauchtes Calcium und 15-25 % Fernsehbildschirme und Computer und elektronische Geräte enthält.

16. Verfahren nach Anspruch 10, **dadurch gekennzeichnet, dass** die Mischung 25-30 % verbrauchtes Calcium, 15-25 % Abfälle und leichte Asche aus Verbrennungsanlagen und 10-15 % Abfälle aus dekontaminiertem Gelände enthält.

17. Verfahren nach Anspruch 10, **dadurch gekennzeichnet, dass** die Mischung 20-30 % ACM, 20-30 % leichte Asche aus Verbrennungsanlagen und 5-10 % Industrieschlamm enthält.

18. Verfahren nach Anspruch 10, **dadurch gekennzeichnet, dass** die Mischung 15-20 % ACM, 10-20 % verbrauchtes Calcium und 15-25 % Drainageschlamm enthält.

## Revendications

1. Procédé pour le traitement de déchets dangereux, comprenant les étapes suivantes
a) la préparation d'un mélange d'au moins trois déchets dangereux différents pour la préparation de matériaux vitrocéramiques de revêtement ou de plancher sélectionnés à partir d'un groupe constitué par:
A) MCA - matériaux contenant de l'amiante
B) Calcium épuisé et autres substances provenant de stations d'épuration
C) Boues produites par l'épuration d'effluents industriels
D) Déchets lourds et soude légère provenant d'incinérateurs et d'installations de combustion
E) Boue de drainage provenant de contaminants de sols mouillés ou provenant d'installations de stockage
F) Boues provenant de sols contaminés restaurés
G) Boues hydro-métallurgiques
H) Déchets de processus métallurgiques
I) Verre et écrans de télévision, ordinateurs, appareils électroniques, fibres de verre et déchets de verre
une quantité totale de déchets dangereux contenus dans le mélange étant au moins 50% en poids du mélange ;
b) le broyage et/ou le mélange et la fusion dudit mélange jusqu'à la formation d'un verre fondu ;
c) le chauffage d'un matériau vitrifié obtenu dans l'étape précédente b) jusqu'à la céramisation du matériau vitrifié,
**caractérisé en ce que** ladite étape de céramisation c) est précédée par les étapes suivantes
b2) la solidification et le broyage dudit matériau vitrifié obtenu dans l'étape b) de manière à obtenir une poudre de verre ;
b3) le mélange de ladite poudre de verre avec un liant pour améliorer les capacités de cohésion du mélange après pressage ;
b4) le pressage dudit mélange de poudre de manière à obtenir un produit manufacturé de poudres compactées ;
l'étape de céramisation (c) étant obtenue par cuisson du produit en poudre compactée de manière à obtenir la céramisation des poudres de verre.

2. Procédé selon la revendication 1, **caractérisé en ce que**, durant ladite étape b2), le verre solidifié est broyé de manière à obtenir une poudre de verre ayant une granulométrie inférieure à 30 microns.

3. Procédé selon la revendication 2, **caractérisé en ce que** le liant de l'étape b3) est sélectionné à partir du groupe comprenant:
Argile
Matériaux thermoplastiques
Cires synthétiques
Matières plastiques liquides durcissables.

4. Procédé selon la revendication 1, **caractérisé en ce que**, dans l'étape b), les déchets dangereux sont broyés jusqu'à ce qu'une granulométrie inférieure à 500 microns soit obtenue, avant la fusion.

5. Procédé selon la revendication 1, **caractérisé en ce que** le broyage des déchets dangereux est effectué par broyage humide, de manière à obtenir des nattes.

6. Procédé selon la revendication 6, **caractérisé en ce que** lesdites nattes sont soumises à une formation de pellets, de manière à obtenir des copeaux qui sont ensuite séchés et successivement fondus.

7. Procédé selon la revendication 1, **caractérisé en ce que** ladite l'étape de céramisation c) comprend une étape de chauffage à environ 900 °C suivie d'une série de cycles de chauffage, de cycles de stabilisation et de cycles de refroidissement dans une plage comprise entre 900 °C et 1100 °C.

8. Procédé selon la revendication 1, **caractérisé en ce que** ladite étape de céramisation c) est effectuée de manière à obtenir à la fois la céramisation et le frittage du produit en poudres compacté.

9. Procédé selon l'une quelconque des revendications précédentes, **caractérisé en ce que** le reste dudit mélange consiste d'additifs, principalement des silicates, si nécessaire pour enrichir le mélange de déchets dangereux avec des oxydes de vitrification.

10. Procédé selon la revendication 1,
**caractérisé en ce que** ledit mélange a la composition suivante en poids:
SiO2 40-60 %
Al2O3 5-25 %
CaO 10-30%
Oxydes de Na et K 2-5 %

11. Procédé selon la revendication 10, **caractérisé en ce que** ledit mélange contient en outre des oxydes colorants.

12. Procédé selon la revendication 10, **caractérisé en ce que** ledit mélange contient 25-70% de MCA.

13. Procédé selon la revendication 10, **caractérisé en ce que** ledit mélange contient 15-25% de MCA, 10-15% de déchets d'incinérateur et 15%-25% de déchets provenant de processus métallurgiques.

14. Procédé selon la revendication 10, **caractérisé en ce que** ledit mélange contient 20-30% de MCA, 10-15% de calcium épuisé et 15-20% de déchets et de soude légère provenant d'incinérateurs.

15. Procédé selon la revendication 10, **caractérisé en ce que** ledit mélange contient 15-25% de MCA, 10-15% de calcium épuisé et 15-25% d'écrans de télévision et d'ordinateurs et d'appareils électroniques.

16. Procédé selon la revendication 10, **caractérisé en ce que** ledit mélange contient 25-30% de calcium épuisé, 15-25% de déchets et de soude légère provenant d'incinérateurs et 10-15% de déchets de terrains décontaminés.

17. Procédé selon la revendication 10, **caractérisé en ce que** ledit mélange contient 20-30% de MCA, 20-30% de soude légère provenant d'incinérateurs et 5-10% de boues industrielles.

18. Procédé selon la revendication 10, **caractérisé en ce que** ledit mélange contient 15-20% de MCA, 10-20% de calcium épuisé et 15-25% de boues de drainage.
